# EUROPEAN PATENT APPLICATION

(11) **EP 4 597 283 A1**
(43) Date of publication of application: **06.08.2025**
(21) Application number: 23870364.9
(22) Date of filing: 14.09.2023
(51) Int. Cl.: G06F 3/0484

(54) **IMAGE SELECTION COMPONENT AND METHOD, DEVICE, MEDIUM, AND PROGRAM PRODUCT**

(30) Priority: 30.09.2022 CN 202211239277
(71) Applicant: Beijing Zitiao Network Technology Co., Ltd., Beijing 100190 (CN)
(72) Inventor: ZHANG, Yikun, Beijing 100028 (CN); ZHU, Yixuan, Beijing 100028 (CN); CHEN, Zhi, Beijing 100028 (CN)
(74) Representative: Marks & Clerk LLP
(86) International application number: PCT/CN2023/118834
(87) International publication number: WO 2024/067128

(57) **Abstract**

Disclosed herein are an image selection component and method, a device, a storage medium and a program product. The image selection component capable of presenting at least the following controls in a display area, respectively: an image processing scenario selection control for selecting a corresponding image processing scenario in response to a first control instruction; an image directory selection control for selecting a corresponding image directory in response to a second control instruction; and a display control for displaying, based on the image processing scenario and the image directory, first image thumbnails in a first area of the display area; wherein the display control is further used for displaying a target image thumbnail in the first area in response to an operation instruction for the first image thumbnails.

## Description

### CROSS-REFERENCE TO RELATED APPLICATION(S)

The present disclosure claims the priority from the CN patent application No. 202211239277.0 entitled "IMAGE SELECTION COMPONENT AND METHOD, DEVICE, MEDIUM AND PROGRAM PRODUCT" filed on September 30, 2022, the content of which is hereby incorporated by reference in its entirety.

### FIELD

The present disclosure relates to the technical field of computers, in particular, to an image selection component and method, a device, a medium and a program product.

### BACKGROUND

Nowadays, users can perform image processing on terminals to modify images, in order to obtain satisfactory image effects. However, the existing image processing only allows a single type of image processing scenario to be presented on an interface. If desiring to perform different types of image processing, a user has to exit the interface of the current image processing scenario and then enters an interface of a further image processing scenario for further type of image processing. This makes the switching operations among different image processing scenarios cumbersome, which not only reduces the image processing efficiency but also brings inconvenience to the user operation.

### SUMMARY

The present disclosure provides an image selection component and method, a device, a storage medium and a program product, to solve, to some extent, the technical problem of performing cumbersome switching operations among different image processing scenarios and reducing the image processing efficiency.

In a first aspect of the present disclosure, there is provided an image selection component capable of presenting at least the following controls in a display area, respectively:
an image processing scenario selection control for selecting a corresponding image processing scenario in response to a first control instruction;
an image directory selection control for selecting a corresponding image directory in response to a second control instruction; and
a display control for displaying, based on the imagine processing scenario and the image directory, first image thumbnails in a first area of the display area;
wherein the display control is further used for displaying target image thumbnails in the first area in response to an operation instruction for the first image thumbnail.

In a second aspect of the present disclosure, there is provided an image selection method, comprising:
in response to selecting a first control instruction of a corresponding image processing scenario and in response to selecting a corresponding image directory, displaying, based on the image processing scenario and the image directory, first image thumbnails in a first area of the display area; and
in response to an operation instruction for the first image thumbnails, displaying, in the first area, target image thumbnails.

In a third aspect of the present disclosure, there is provided an electronic device comprising: one or more processors; a memory; and one or more programs, wherein the one or more programs are stored in the memory and executed by the one or more processors, which comprise instructions for executing the method according to the second aspect.

In a fourth aspect of the present disclosure, there is provided a non-volatile computer readable storage medium comprising a computer program, wherein the computer program causes the processor to perform the method according to the second aspect when executed by one or more processors;

In a fifth aspect of the present disclosure, there is provided a computer program product comprising computer program instructions that cause a computer to perform the method according to the second aspect when executed by the computer.

As could be seen from above, by enabling different image processing scenarios to be selected on the same interface by means of image processing scenario controls, the image selection component and method, the device, the medium and the program product provided by the present disclosure can implement quick and convenient switch among different image processing scenarios on the same interface, without requiring users to frequently exit from and enter interfaces, thus simplifying the user operations while improving image processing efficiency.

### BRIEF DESCRIPTION OF THE DRAWINGS

In order to make clearer the technical solution according to the present disclosure or the related technology, brief introduction of the drawings required in the respective embodiments or the related technology will be provided below. It would be appreciated that the drawings described below only illustrate some embodiments of the present disclosure, on the basis of which the ordinary skill in the art could derive other related drawings, without doing creative work.
Fig. 1 illustrates a schematic diagram of an image selection architecture according to embodiments of the present disclosure.
Fig. 2 illustrates a schematic diagram of a hardware structure of an example electronic device according to embodiments of the present disclosure.
Figs. 3-8 illustrate schematic diagrams of an image selection interface according to embodiments of the present disclosure.
Fig. 9 illustrates a schematic diagram of an image selection component according to embodiments of the present disclosure.
Fig. 10 illustrates a flowchart of an image processing method according to embodiments of the present disclosure.

### DETAILED DESCRIPTION OF EMBODIMENTS

In order to make the objective, the technical solution and the advantages of the present disclosure more apparent, the present disclosure will be further detailed in conjunction with specific embodiments and with reference to the accompanying drawings.

Unless defined otherwise, technical and scientific terms used herein have the same meaning as is commonly understood by one of ordinary skill in the art to which this disclosure belongs. The terms "first", "second", and the like, as used herein do not denote any order, quantity, or importance, but rather are used to distinguish one element from another. The use of "including" or "comprising" and variations thereof herein means that an element or object before the word encompasses elements or objects listed thereafter and equivalents, but do not exclude other elements or objects. The terms "connected" and "coupled" are not restricted to physical or mechanical connections or couplings, and can include electrical connections or couplings, whether direct or indirect. The terms "upper," "lower," "left," "right" and the like are only used to indicate relative positional relationships. When the absolute position of the described object is changed, the relative positional relationship may be changed accordingly.

Nowadays, users often use the image processing technology on terminals to perform image processing (e.g. image collaging, color toning or the like) on images to obtain images with more diversified effects. However, the existing image processing only allows a single type of image processing scenario to be presented on an interface. If desiring to perform different types of image processing, a user has to exit the interface of the current image processing scenario and then enters an interface of a further image processing scenario for a further type of image processing. That is, the existing image processing cannot simultaneously provide multiple types of image processing scenarios available to user on the same interface. This makes the switching operations among different image processing scenarios cumbersome, which not only reduces the image processing efficiency but also brings inconvenience to the user operation. As such, there arises an urgent need for solving the technical problem of how to provide different image processing scenarios available to users on the same interface to improve the image processing efficiency.

In view of the above, the embodiments of the present disclosure provide an image selection component and method, a device, a medium and a program product, which can implement quick and convenient switch among different image processing scenarios on the same interface by using image processing scenario controls to enable different image processing scenarios to be selected on the same interface, without requiring users to frequently exit from and enter interfaces, thus simplifying the user operations while improving image processing efficiency.

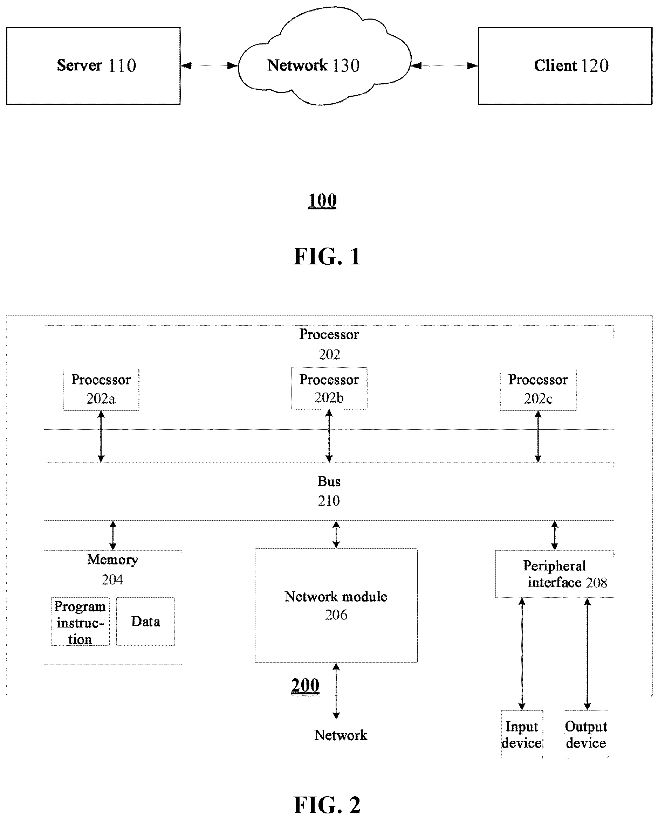

Fig. 1 illustrates a schematic diagram of an image selection architecture according to embodiments of the present disclosure. Referring to Fig. 1, the image processing architecture 100 may include a server 110, a terminal 120 and a network 130 for providing communication links. The server 110 and the terminal 120 can be connected via a wired or wireless network 130. Wherein, the server 110 may be an independent physical server, or may be a server cluster or a distributed system comprised of a plurality of physical servers, or may be a cloud server that provides basic cloud computing services such as cloud services, cloud databases, cloud computing, cloud functions, cloud storage, network services, cloud communications, middleware services, security services, CDN and the like.

The terminal 120 may be implemented by hardware or software. For example, if implemented by hardware, the terminal 120 may be various electronic devices having a display screen and capable of supporting page display, including, but not limited to, a smart phone, a tablet computer, an e-book reader, a laptop computer, a desktop computer and the like. If implemented by software, the terminal 120 can be installed on the electronic devices listed above, which may be implemented as multiple types of software or software modules (e.g. software or software modules for providing distributed services), or may be implemented as a single type of software or a single software module, which is not specifically limited herein.

It is worth noting that the image processing method provided by embodiments of the present disclosure may be performed by a terminal 120, or by a server 110. It would be appreciated that the number of the terminals, the networks or the servers in Fig. 1 is provided only exemplarily, without suggesting any limitation. Any number of terminal, network or server may be provided as required in practice.

Fig. 2 illustrates a schematic diagram of a hardware structure of an example electronic device 200 provided by embodiments of the present disclosure. As shown therein, the electronic device 200 may include: a processor 202, a memory 204, a network module 206, a peripheral interface 208 and a bus 210. Wherein, the processor 202, the memory 204, the network module 206 and the peripheral interface 208 are communicatively connected to one another within the electronic device 200 via the bus 210.

The processor 202 may be a Central Processing Unit (CPU), an image processor, a Neural Network Processor (NPU), a Microcontroller Unit (MCU), a programmable logic device, a Digital Signal Processor (DSP), an Application Specific Integrated Circuit (ASIC), or one or more integrated circuits. The processor 202 may be used to perform functions related to the technology described herein. In some embodiments, the processor 202 may include a plurality of processors integrated into a single logic component. For example, as shown in Fig. 2, the processor 202 may include a plurality of processors 202a, 202b and 202c.

The memory 204 can be configured to store data (e.g. instructions, computer code and the like). As shown in Fig. 2, the data stored in the memory 204 may include program instructions (e.g. program instructions for implementing the image selection method according to the embodiments of the present disclosure) and data to be processed (e.g. the memory may store therein configuration files of other modules, and the like). The processor 202 can access the program instructions and data stored in the memory 204, and execute the program instructions to operate on the data to be processed. The memory 204 may include a volatile storage device or a non-volatile storage device. In some embodiments, the memory 204 may include a Random Access Memory (RAM), a Read Only Memory (ROM), an optical disk, a magnetic disk, a hard disk, a Solid State Drive (SSD), a flash memory, a memory stick, or the like.

The network module 206 can be configured to enable the electronic device 200 to communicate with other external devices via a network. The network may be any wired or wireless network capable of transmitting and receiving data. For example, the network may be a wired network, a local wireless network (e.g. Bluetooth, WiFi, Near Field Communication (NFC) and the like), a cellular network, the Internet, or a combination thereof. It would be appreciated that the type of the network is not limited to the specific examples listed above. In some embodiments, the network module 306 may include any combination of any number of Network Interface Controllers (NICs), radio frequency modules, transceivers, modems, routers, gateways, adapters, cellular network chips and the like.

The peripheral interface 208 can be configured to connect the electronic device 200 with one or more peripheral devices, to achieve information input and output. For example, the peripheral device may include an input device such as a keyboard, a mouse, a touch pad, a touch screen, a microphone, various sensors and the like, and an output device such as a display, a loudspeaker, a vibrator, an indicator light and the like.

The bus 210 can be configured to transmit information among respective components (e.g. the processor 202, the memory 204, the network module 206 and the peripheral interface 208) of the electronic device 200, for example, via an internal bus (e.g. a processor-memory bus), an external bus (e.g. a USB port or a PCI-E bus) and the like.

Although only the processor 202, the memory 204, the network module 206, the peripheral interface 208 and the bus 210 are shown, the architecture of the electronic device 200 may further include other components necessary for normal operation in the specific implementation process. Moreover, it would be appreciated by those skilled in the art that the architecture of the electronic device 200 may include only components necessary for implementing the solution according to the embodiments of the present disclosure, rather than all of them shown in Fig. 2.

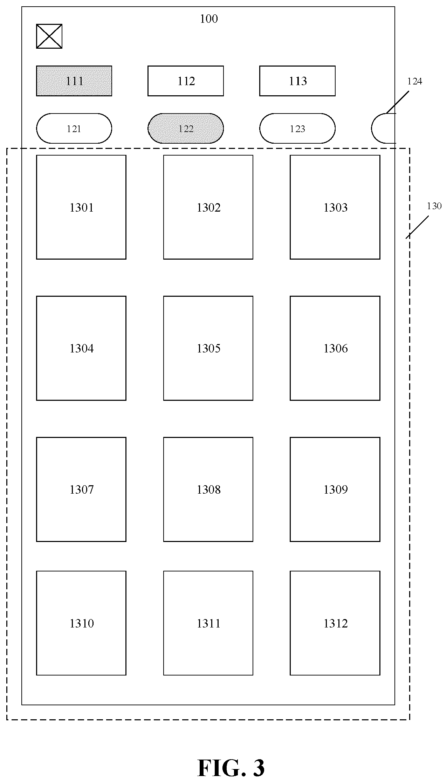

A user can enter an image processing application in the electronic device to perform corresponding image processing on an image to be processed. During image processing, an image selection interface 100 can be presented in the display area of the electronic device, as shown in Fig. 3. Fig. 3 illustrates a schematic diagram of an image selection interface according to embodiments of the present disclosure. In Fig. 3, the image selection interface 100 can present image processing scenario selection controls 111-113 for selecting different image processing scenarios. For example, the image processing scenario selection control 111 can be used for selecting an image editing scenario, the image processing scenario selection control 112 can be used for selecting an image collage scenario, and the image processing scenario control 113 can be used for selecting a batch color toning scenario. The user may perform a first trigger operation O1 on the image processing scenario selection control 111, to generate a first control instruction D1. In response to the first control instruction D1, the image processing scenario selection control 111 selects an image processing scenario corresponding thereto.

The image selection interface 100 can present image directory selection controls 121-124 for selecting different image directories. In some embodiments, the image directory may refer to different image sources. For example, the image directory may cover different applications, which indicates the image is sourced from different applications. In some embodiments, the image directory may refer to different image attributes (for example, the image directory may include a latest item, which indicates that images under the image directory are arranged in a reversed chronological order); the image directory may refer to personal favorites, which indicates that the images under the image directory are images favorited by the user; the image directory may refer to portraits, which indicate that all images under the image directory are portraits; the image directory may refer to selfies, which indicate that the images under the image directory are selfies took by the user, and the like. Specifically, in Fig. 3, the user may perform a second trigger operation O2 on the image directory selection control 122, to generate a second control instruction D2. In response to the second control instruction D2, the image directory selection control 122 selects an image directory corresponding thereto.

The image processing scenario selection control or the image directory selection control may be fully displayed, for example, the image processing scenario selection controls 111-113 and the image directory selection controls 121-123, or may be partially displayed, for example, the image directory selection control 124. The partially displayed image processing scenario selection controls or image directory selection controls can be displayed fully through a corresponding first preset operation. For example, the user may perform a swipe-left operation on the image directory selection controls, and in response to the swipe-left operation, the image directory selection control 124 in Fig. 3 is changed from partial display to full display. At this time, the image directory selection control 121 originally fully displayed is displayed partially or exits from the screen. It would be appreciated that the image selection interface 100 may include more or fewer image processing scenario selection controls or image directory selection controls, which is not limited herein.

The image selection interface 100 can display a display control for displaying, based on the image processing scenario and the image directory, first image thumbnails in a first area of the display area. Wherein, the user can select a corresponding image processing scenario based on the image processing scenario selection control, and select a corresponding image directory based on the image directory selection control. Then, the display control can display, based on the selected image processing scenario and image directory, corresponding first image thumbnails in the first display area. For example, in Fig. 3, the image processing scenario selection control 111 corresponding to the image processing scenario A and the image directory selection control 122 corresponding to the image directory B are selected, and the display control displays, based on the image processing scenario A and the image directory B, first image thumbnails 1301-1312 in the first area 130.

In some embodiments, the first image thumbnails are stored in the cache.

In some embodiments, displaying, based on the image processing scenario and the image directory, the first image thumbnails in the first area of the display area may further include:
obtaining, based on the image processing scenario and the image directory, first index information of a first image to be processed;
determining, from the first index information, first target index information;
obtaining, based on the first target index information, the first image thumbnails, and storing the first image thumbnails in the cache; and
displaying, in the first area, the first image thumbnails in the cache.

Specifically, a first interface can be called to obtain first index information of all the first images to be processed (which may be one or more) associated with the image processing scenario A and the image directory B. Wherein, the first index information may include identifier information of the first image to be processed, for example, the image ID information or image path information. If there is a great number of first images to be processed, the size limitation of the display area makes it impossible to simultaneously display all the first images to be processed. At this time, the number of the first images to be processed than can be displayed can be determined based on the size parameter of the first area of the image selection interface 100. For example, a first number n1 of the first images to be processed that can be displayed can be determined based on the size of the first area 130 in Fig. 3, and index information of the part of the first images to be processed that will be displayed in the first area 130 (i.e., first target index information) can be further determined. For example, the first n1 pieces of the first index information is determined as the first target index information. Thereafter, a second interface can be called to obtain the first image thumbnails 1301-1312 corresponding to the first target index information, and the first image thumbnails 1301-1312 are stored in the cache. Further, the first image thumbnails 1301-1312 in the cache can be displayed in the firs area 130.

In some embodiments, obtaining, based on the image processing scenario and the image directory, the first index information of the first image to be processed comprises:
filtering, based on a preset rule corresponding to the image processing scenario and the image directory, all images to be processed to determine the first image to be processed; and
obtaining the first index information of the first image to be processed.

Obtaining, based on the determined image processing scenario and image directory, all the associated first images to be processed may include filtering all the images to be processed based on a corresponding preset rule, to determine the first images to be processed. In some embodiments, the preset rule can be used for obtaining, by filtering, images suitable for the selected image processing scenario and image directory. For example, the preset rule may be a preset image size, a preset image ratio or the like. Since different image processing scenarios have different requirements for attributes of the images to be processed, not all the images to be processed are suitable for each image processing scenario. For example, for an image collage scenario, panoramic images are not suitable for collage due to too great dimensions. As such, the images not suitable for the selected image processing scenario can be filtered out, omitting the step of loading those unsuitable images, which can reduce the memory usage and improve the image processing efficiency and smoothness. It would be appreciated that different preset rules can be applied to different combinations of image processing scenarios and image directories.

In some embodiments, the first image may have a visible identifier. In some embodiments, displaying, based on the image processing scenario and the image directory, the first image thumbnails in the first area of the display area further includes: performing a first value assignment operation on the visible identifiers of the first image thumbnails when storing the first image thumbnails into the cache. For example, the first assignment operation may be +1, indicating that the first image is called if an image processing scenario is added currently.

In some embodiments, the display control is further used for:
in response to a first selection instruction for the first image thumbnails, displaying the selected first image thumbnails in a second area of the display area; or
in response to a second selection instruction for the target image thumbnails, displaying the selected target image thumbnail in the second area of the display area.

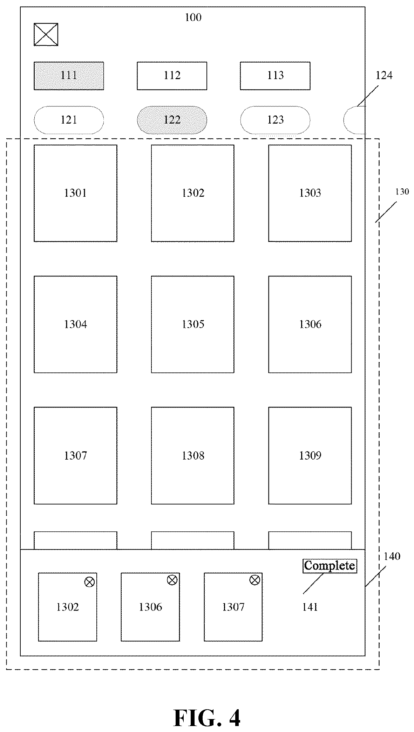

Specifically, Fig. 4 illustrates a schematic diagram of an image selection interface according to embodiments of the present disclosure. As shown therein, the user can select one or more images to be processed from the first image thumbnails 1301-1312 displayed in the first area 130. The user selects the first image thumbnails 1302, 1306 and 1307 for image processing, to generate the first selection instruction. In response to the first selection instruction, the first image thumbnails 1302, 1306, 1307 selected by the user can be displayed in the second area 140. The user may also remove the selected images from the second area 140. For example, the image processing scenario selection control 111 may correspond to the image collage scenario. In the case, after selecting the first image thumbnails to be collaged, the user can perform image collage processing through a trigger control 141 to splice images corresponding to the first image thumbnails 1302, 1306, 1307 into an image. For another example, the image processing scenario selection control 111 may correspond to the batch color toning scenario. In the case, after selecting the first image thumbnails to be toned, batch color toning is performed through a trigger control 141 to automatically tone the images corresponding to the first image thumbnails 1302, 1306, 1307, respectively, to thus obtain the toned images. Similar to Fig. 4, the user can make a selection from the target image thumbnails to generate a second selection instruction, and the selected target image thumbnails are then displayed in the second area.

In some embodiments, the target image thumbnails include at least a part of the first image thumbnails stored in the cache.

The image selection component provided by embodiments of the present disclosure can provide multiple types of image processing scenarios available to users on the same interface. Each type of image processing scenario corresponds to a set of images to be processed. Because images are data occupying a large space of the memory, it costs a great amount of memory to load the set of images, which may cause the image processing to freeze or even crash, impacting the user experience. On the basis of the above considerations, the image selection component provided by the embodiments of the present disclosure allows images to be processed in different image processing scenarios to share the same cache, to reduce the memory usage of the images, avoid freezing or crashing of the image processing (i.e., making the image processing smoother), and improve the user experience.

In some embodiments, the operation instruction for the first image thumbnails include:
a first operation instruction for displaying the first image thumbnails in a scrolling manner;
a second operation instruction for switching the image processing scenario; or
a third operation instruction for switching the image directory.

The user can perform different operations on the image selection interface 100 in Fig. 3 to generate an operation instruction for the first image thumbnails 1301-1312, to implement at least one of switching image processing scenario, switching the image directory or displaying the thumbnails in a scrolling manner. As compared with the prior art, the present disclosure can simplify the user operation by saving the step of frequently exiting from and entering different interfaces, and can thus improve the convenience of switching among different image processing scenarios during image processing.

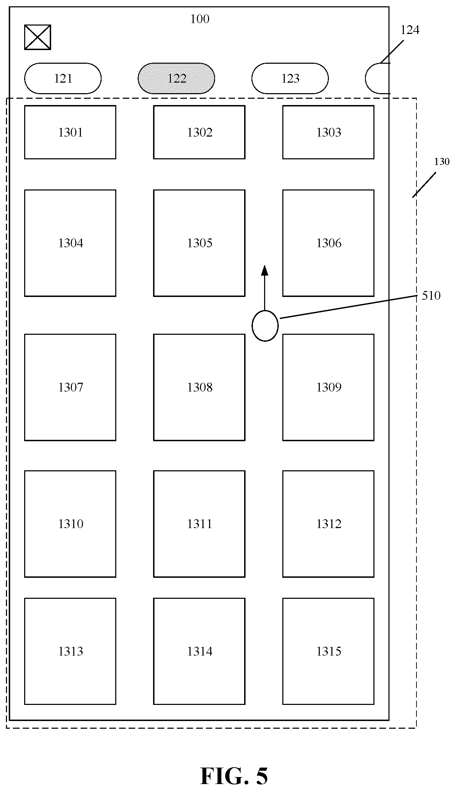

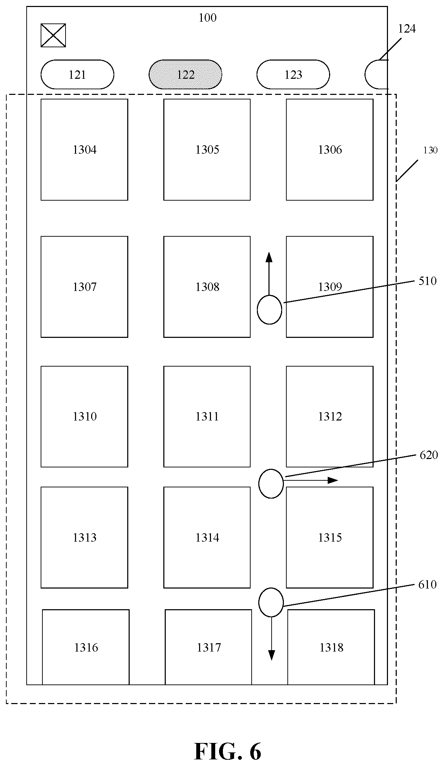

In some embodiments, the user may perform swipe-up or swipe-down operations (including a swipe-up operation or a swipe-down operation), to display the image thumbnails in the first area 130 in a scrolling manner, as shown in Fig. 5. Fig. 5 illustrates a schematic diagram of an image selection interface according to embodiments of the present disclosure. The user may perform a swipe-up operation 510 in the first area 130 to generate to a first operation instruction. In response to the first operation instruction, the first image thumbnails can be displayed in the first area 130 in a scroll-down manner. In order to display more first image thumbnails, the image processing scenario selection controls 111-113 can be hidden. At this time, the first image thumbnails 1301-1303 may be partially displayed. If the user continues with the swipe-up operation 510 in the first area 130 in Fig. 1, the first image thumbnails 1316-1318 are displayed in the first area 130. At this time, the first image thumbnails 1301-1303 are moved out of the first area 130, as shown in Fig. 6. Fig. 6 illustrates a schematic diagram of an image selection interface according to embodiments of the present disclosure. If the user performs a swipe-down operation 610 in the first area 130 in Fig. 6, the first image thumbnails 1301-1303 preceding the first image thumbnails 1304-1318 displayed on the current screen can be displayed in the first area 130, as shown in Fig. 5. When the scfirst image thumbnails 1301-1303 ranked top are being displayed, if the user continues to perform the swipe-down operation 610, the image processing scenario selection controls 111-113 are displayed.

In some embodiments, when the scrolling display of the first image thumbnails stops, the first image thumbnails with visible identifiers having a preset identifier value in the cache can be removed from the cache. For example, the preset identifier value may be 0. Specifically, when the user stops the swipe-up or swipe-down operation, the first image thumbnails stop scrolling. Upon detecting that the user does not detect the first operation instruction within a preset time period, or the first image thumbnails do not scroll, the first image thumbnails with the visible identifiers of 0 can be removed from the cache. In this way, the present disclosure can release the cache, reduce the cache usage, and further guarantee the smoothness of the image processing.

After the swipe-up or swipe-down operation stops (or the first operation instruction is not detected), the thumbnails displayed by the display control in the first area 130 are changed from the first image thumbnails to the target image thumbnails. As compared with the first image thumbnails displayed before the swipe-up or swipe-down operation, the target image thumbnails displayed after the swipe-up or swipe down operation may include a repeated image thumbnail, or may include a newly added image thumbnail, or may include a removed image thumbnail.

In some embodiments, for the repeated image thumbnail in the target image thumbnails as compared with the first image thumbnails, the display control can directly display, in the first area 130, the repeated image thumbnail in the cache.

In some embodiments, the newly added image thumbnail in the target image thumbnails as compared with the first image thumbnails is a second image thumbnail. The second image thumbnail is an image thumbnail in the target image thumbnails, which is different than the first image thumbnails. Wherein, the second image thumbnail is obtained based on the corresponding image index information and stored in the cache, and the first value assignment operation is performed for the visible identifier of the second image thumbnail. Specifically, a corresponding first interface can be called to obtain the image index information, a corresponding second interface can be called based on the image index information to obtain the second image thumbnail, and the second image thumbnail is stored in the cache; and the first value assignment operation (for example, +1) is performed for the visible identifier of the second image thumbnail. Then, the second image thumbnail in the cache is displayed in the first area 130.

In some embodiment, the image thumbnail in the target image thumbnails, removed from the first image thumbnails, is a third image thumbnail. The third image thumbnail is an image thumbnail image in the first image thumbnails, which is different than the target image thumbnails. The display control can remove the third image thumbnail from the first area. It would be appreciated that removing the third image thumbnail from the first area does not indicate that the third image thumbnail is removed from the cache.

In some embodiments, displaying the target image thumbnails in the first area further includes: after removing the first image thumbnail with the preset identifier value, performing second value assignment operation on the visible identifier of the third image thumbnail.

In some embodiments, displaying the target image thumbnails in the first area further includes:
receiving a new operation instruction for the target image thumbnails at least once; and
in response an end of each new operation instruction, removing an image thumbnail with the preset identifier value from the cache, and then performing the second value assignment operation on the visible identifier of the image thumbnail removed from the first area.

In some embodiments, the new operation instruction may include: a first operation instruction for displaying the first image thumbnail in a scrolling manner; a second operation instruction for switching the image processing scenario; or a third operation instruction for switching the image directory.

Wherein, the second value assignment operation may include -1, indicating that the second image is called if an image processing scenario is reduced currently. As could be seen above, before an image thumbnail S is moved out of the first area, the thumbnails with the visible identifiers of the preset identifier value in the cache are cleared, to free up the cache. After the image thumbnail S is moved out of the first area, the second value assignment operation is performed on the image thumbnail S moved out of the first area, and even if the visible identifier of the image thumbnail S has the preset identifier value after the second value assignment operation, the image thumbnail S still remains in the cache. After a next scrolling operation ends, the image thumbnail S is cleared only when the image thumbnails with the preset identifier value are cleared out of the cache. As such, the image thumbnails in the cache are removed only after the next scrolling ends, rather than immediately upon detecting that the visible identifier has the preset identifier value, because the user may continue to scroll up or down. By clearing the image thumbnail, which is moved out of the first area in this operation, from the cache at the end of the next operation, the present disclosures can reduce the frequency of calling interfaces and loading images, making the scrolling operation smoother.

For example, the user can perform the swipe-up or swipe-down operation to display the first image thumbnails in a scrolling manner, where the visible identifiers of the first image thumbnails 1301-1312 in Fig. 3 may be +1. In some embodiments, after the swipe-up or swipe-down operation stops (the first operation instruction is not detected) or the image thumbnails in the first area stop scrolling, the thumbnail images with the preset identifier value of 0 in the cache can be removed, to free up the cache. At this time, the visible identifiers of the first image thumbnails 1301-1312 in the cache are all +1, rather than the preset identifier value of 0, and the first image thumbnails 1301-1312 therefore are not removed from the cache.

At this time, target index information of the target image thumbnails 1301-1315 to be displayed in the first area 130 in Fig. 5 may be obtained; after performing retrieval, based on the target index information of the target image thumbnails 1301-1315 and through the cache, for whether corresponding images are present, it may be determined that the same first image thumbnails 1301-1312 are included in the cache, and the first image thumbnails 1301-1312 in the cache are then directly displayed in the first area 130 in Fig. 5. Meanwhile, it may be determined that the cache does not include the target image thumbnails 1313-1315, and then, the target image thumbnails 1313-1315 may be obtained based on the target index information of the target image thumbnails 1313-1315 and stored in the cache. Thereafter, the first value assignment operation (for example, +1) may be performed on the visible identifiers of the target image thumbnails 1313-1315. The display control can display, in the first area 130 in Fig. 5, the target image thumbnails 1313-1315 in the cache. Since no image thumbnail is moved out of the first area 130 upon the end of the swipe-up or swipe-down operation, there is no need for performing the second value assignment operation on any image thumbnail.

The user performs the swipe-up or swipe-down operation again. After the swipe-up or swipe-down operation stops or the image thumbnails within the first area 130 stop scrolling, the thumbnails with the preset identifier value of 0 may be removed from the cache. In the case, the visible identifiers of the image thumbnails 1301-1315 in the cache are all +1, rather than the preset identifier value of 0, and the image thumbnails 1301-1315 are therefore removed from the cache.

The index information of the image thumbnails 1304-1318 to be displayed in the first area 130 in Fig. 1 can also be obtained. After the index information of the image thumbnails 1301-1315 in Fig. 5 is compared with the index information of the image thumbnails 1304-1318 in Fig. 6, it is determined that the image thumbnails 1301-1303 are moved out of the first area 130 after the thumbnails within the first area 130 stops scrolling. The second value assignment operation (for example, -1) can be performed on the visible identifiers of the moved first image thumbnails 1301-1303. Considering that the visible identifiers of the image thumbnails 1301-1303 in Fig. 5 are +1, the visible identifiers of the image thumbnails 1301-1303 in Fig. 6 are 0 after the second operation of -1 is performed. At this time, the first thumbnails 1301-1303 are not removed from the image cache.

If it is determined that the cache includes therein the image thumbnails 1304-1315, the display control can display, in the first area 130 in Fig. 6, the image thumbnails 1304-1315 in the cache. If it is determined that the cache does not include therein the image thumbnails 1316-1318, the newly added image thumbnails 1316-1318 can be obtained based on index information corresponding thereto, and can be stored in the cache. The first value assignment operation (for example, +1) can be performed on the visible identifiers of the image thumbnails 1316-1318. Thereafter, the display control can display, in the first area 130 in Fig. 6, the image thumbnails 1316-1318.

The user may perform the swipe-up or swipe-down operation again. After the swipe-up or swipe-down operation stops or the image thumbnails in the first area 130 stop scrolling, the thumbnail images with the preset identifier value of 0 in the cache can be removed. Since the visible identifiers of the image thumbnails 1301-1303 are 0, the image thumbnails 1301-1303 can be removed from the cache. In this way, the image resources not useful for the time being can be cleared timely, which can free up the storage space of the memory and thus solve the peak problem of the memory. In the meantime, for the image thumbnails moved out of the first area after the swipe-up or swipe-down operation, the second value assignment operation (-1) can be performed on the visible identifiers thereof.

In view of the above, in the embodiments of the present disclosure, the image thumbnails 1301-1303 are removed from the image cache only when the visible identifiers of the image thumbnails 1301-1303 are still 0 after the next scrolling operation ends, rather than immediately upon the visible identifiers of the image thumbnails 1301-1303 being changed to 0, to thus avoid an increase of loaded images caused by the continuous scrolling operation performed by the user. In this way, the frequency of calling interfaces can be reduced greatly, making the image processing smoother.

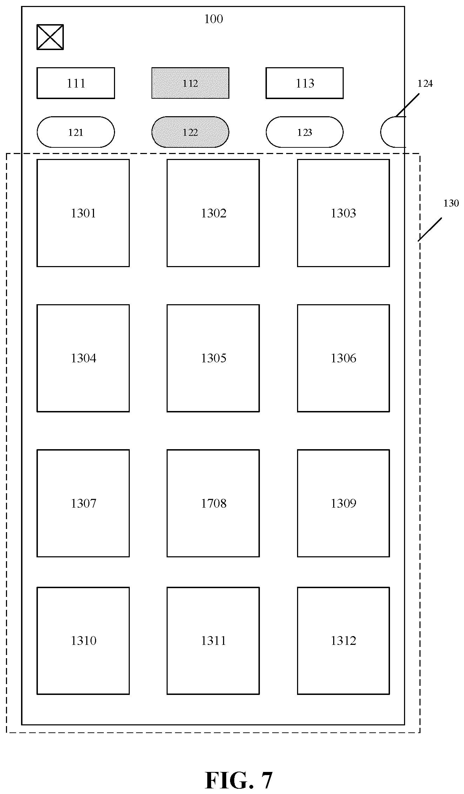

In some embodiments, the user may trigger the image processing scenario control 112 to generate a second operation instruction for switching the image processing scenario. Fig. 7 illustrates a schematic diagram of an image selection interface according to embodiments of the present disclosure. As shown therein, the image processing scenario selection control 112 corresponding to the image processing scenario C and the image direction selection control 122 corresponding to the image directory D are selected, and the first interface can be called to obtain second index information of second images to be processed (the number thereof may be one or more) about the image processing scenario C and the image director D. A second number n2 of the second images to be processed that can be displayed can be determined based on the size parameter of the first area 130, and second target index information of the second number n2 in the second index information can be determined (for example, first n2 pieces of the second index information (i.e., index information of the image thumbnails 1301-1307, 1708, 1309-1312) can be determined as the second image index information). After performing retrieval, based on the second target index information and through the cache, for whether corresponding image thumbnails are present, it is determined that the cache includes therein image thumbnails 1301-1307,1309-1312. In the case, the image thumbnails 1301-1307, 1309-1312 in the cache can be directly displayed in the first area 130 in Fig. 7. Similar to the description about displaying the images to be processed in different image processing scenarios, the images in the image cache can be shared, to thus decrease repeated loading of images and reduce memory usage.

In some embodiments, the first value assignment operation (for example, +1) can be performed on the visible identifiers of the image thumbnails 1301-1307, 1309-1312. In the case, the visible identifiers of the image thumbnails 1301-1307, 1309-1312 in the cache may be +2. The value of the visible identifier can indicate that the image thumbnail corresponding thereto is called frequently, and cannot be changed immediately to the preset identifier value even if it is moved out of the first area, which can be kept in the cache, without being cleared.

In some embodiments, for the image thumbnail 1708 not included in the cache, it is indicated that the image thumbnail 1708 is a newly added thumbnail. A corresponding interface can be called to obtain the image thumbnail 1708, and the image thumbnail 1708 is stored in the cache. Then, the first value assignment operation (for example, +1) can be performed on the visible identifier of the image thumbnail 1708. In the case, the visible identifier of the image thumbnail 1708 is +1. Thereafter, the display control can also display, in the first area, the image thumbnail 1708 in the image cache in the first area 130.

In some embodiments, similar to Fig. 6, the visible identifiers of the first image thumbnails 1301-1312 in Fig. 3 may be +1. After the user switches the image processing scenario by triggering the image processing scenario selection control 112, as shown in Fig. 7, the image thumbnails with the preset identifier value of 0 in the cache can be removed, to free up the space of the cache. At this time, the visible identifiers of the first image thumbnails 1301-1312 in the cache are +1, rather than the preset identifier value of 0, and therefore, the first image thumbnails 1301-1312 are not removed from the cache.

In some embodiments, after the thumbnails with the preset identifier value of 0 are removed from the cache, the second value assignment operation (for example, -1) can be performed on the visible identifier of the image thumbnail 1308 moved out of the first area 130 during this image processing scenario switching operation. In the case, the visible identifier of the image thumbnail 1308 is changed to 0. In some embodiments, alternatively, after the user switches the image processing scenario, the second value assignment operation is performed on the visible identifiers of all the image thumbnails in the cache. For example, -1 is performed on the visible identifiers of the image thumbnails 1301-1312 in the cache. In some embodiments, alternatively, after the user switches the image processing scenario, a third value assignment operation can be performed on the visible identifiers of the image thumbnails in the cache. For example, a given value (e.g. 0) is assigned to the visible identifiers of all the image thumbnails 1301-1312 in the cache. It would be appreciated that, although the cache includes therein image thumbnails with the preset identifier value of 0, the image thumbnails are not immediately removed from the cache.

After the user switches the image processing scenario again by triggering the image processing scenario selection control 111 or 113, the image thumbnails with the preset identifier of 0 in the cache can be removed, to free up the cache space. For example, the visible identifier of the image thumbnail 1308 moved out of the first area in Fig. 7 is 0, and the image thumbnail 1308 therefore can be removed from the cache. Subsequently, the second value assignment operation (for example, -1) is performed on the visible identifier of the image thumbnail moved out of the first area during this image processing scenario switching operation. In this way, the present disclosure can avoid an increase in the frequency of loading images caused by the image processing scenario switching operation performed by the user, to further guarantee the smoothness of the image processing.

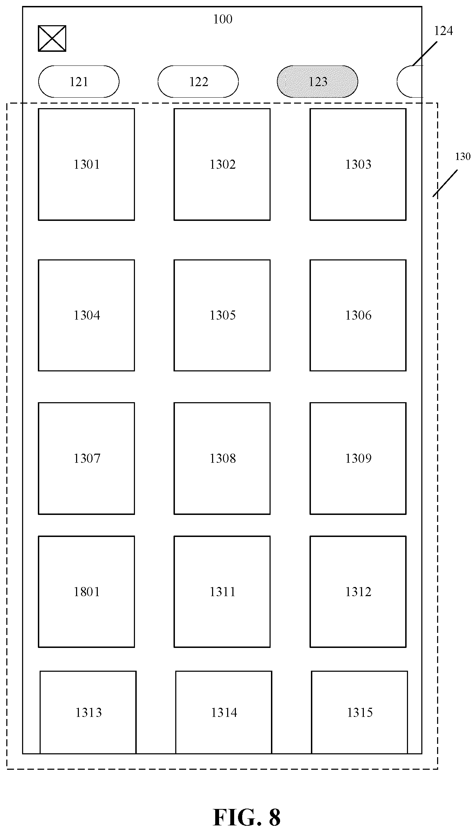

In some embodiments, the user can generate a third operation instruction through a swipe-left or swipe-right operation or by triggering the image directory selection control, to switch the image directory. The user can perform a swipe-right operation 620 on the image selection interface in Fig. 6, to select the image directory control 123, as shown in Fig. 8. Fig. 8 illustrates a schematic diagram of an image selection interface according to embodiments of the present disclosure. Likewise, the user can perform a swipe-left operation on the image selection interface 100, to select the image directory control 121. As shown therein, the display control can display the image thumbnails 1301-1309, 1801, 1311-1315. After performing retrieval, based on the index information of the image thumbnails 1301-1309, 1801, 1311-1315 and through the cache, for whether corresponding image thumbnails are present, it may be determined that the cache includes therein the image thumbnails 1301-1309, 1311-1315. In the case, the image thumbnails 1301-1309, 1311-1315 in the cache can be directly displayed in the first area 130 in Fig. 8. Alternatively, it may be determined that the cache does not include therein the image thumbnail 1801, which indicates that the image thumbnail 1801 is a newly added image thumbnail. In the case, the image thumbnail 1801 can be obtained based on index information thereof, and can be stored in the cache. The first value assignment operation (for example, +1) can be performed on the visible identifier of the image thumbnail 1801. Then, the thumbnail 1801 in the cache can be displayed in the first area 130.

In some embodiments, similar to Fig. 7, the first value assignment operation (for example, +1) can be performed on the visible identifiers of the image thumbnails 1301-1309, 1311-1315. In the case, the identifiers of the image thumbnails 1301-1309, 1311-1315 may be +2. The value of the visible identifier indicates that the corresponding image thumbnail is called frequently, and cannot be immediately changed to the preset identifier value even if moved out of the first area, which can be kept in the cache, without being cleared.

In some embodiments, as shown in Fig. 8 similar to Fig. 6, after the user switches the image directory by triggering the image directory selection control 121 (or 123) as shown in Fig. 5, or performing the swipe-left or swipe-right operation on the image selection interface 100 in Fig. 5, the thumbnails with the preset identifier value of 0 in the cache can be removed, to free up the cache space. At this time, the visible identifiers of the first image thumbnails 1301-1315 in the cache are all +1, rather than the preset identifier value of 0, and therefore, the first image thumbnails 1301-1315 are not removed from the cache.

In some embodiments, after the image thumbnails with the preset identifier value of 0 in the cache are removed, the second value assignment operation (for example, -1) can be performed on the visible identifier of the image thumbnail 1310 moved out of the first area 130 in Fig. 1. In the case, the visible identifier of the image thumbnail 1310 is changed to 0. In some embodiments, alternatively, after the user switches the image directory, the second value assignment operation is performed on the visible identifiers of all the image thumbnails in the cache. For example, -1 is performed on the visible identifiers of the image thumbnails 1301-1315 in the cache. In some embodiments, alternatively, after the user switches the image processing scenario, the third value assignment operation is performed on the visible identifiers of all the image thumbnails in the cache. For example, a given value (e.g. 0) is assigned to all the visible identifiers of the image thumbnails 1301-1315 in the cache. It would be appreciated that, although the cache includes therein image thumbnails with the preset identifier value of 0, the image thumbnails are not removed immediately from the cache.

After the user switches the image processing scenario again by triggering the image directory selection control or through a swipe-left or swipe-right operation, the image thumbnails with the preset identifier value of 0 in the cache can be removed, to free up the cache space. For example, the visible identifier of the image thumbnail 1310 moved out of the first area in Fig. 8 is 0, and the image thumbnail 1308 therefore can be removed from the cache. Then, the second value assignment operation (for example, -1) can be performed on the visible identifier of the image thumbnail moved out of the first area in this image directory switching operation. In this way, the present disclosure can avoid an increase in the frequency of loading images caused by the image processing scenario switching operation performed by the user, to further guarantee the smoothness of the image processing.

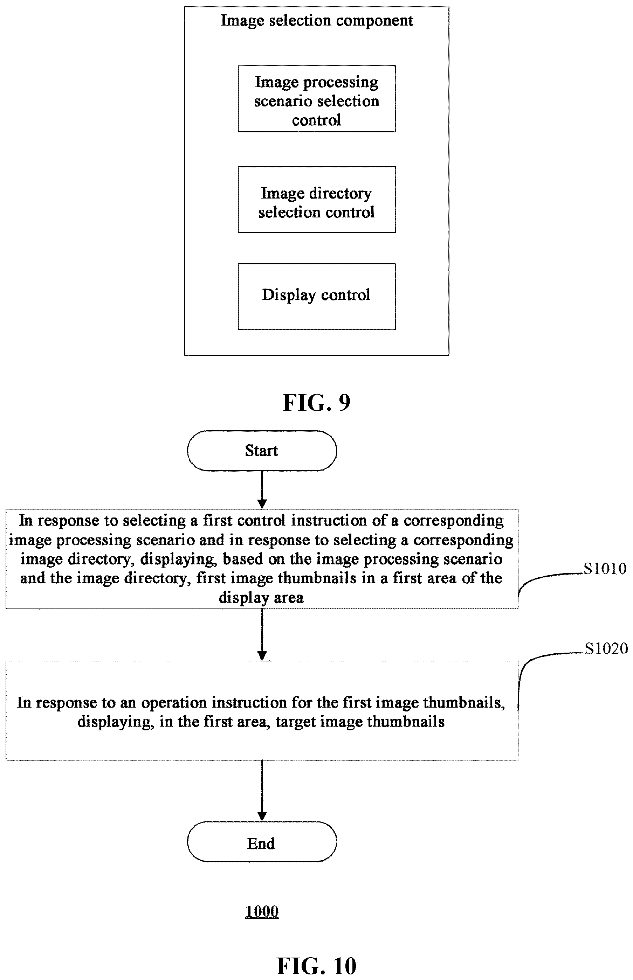

Fig. 9 illustrates a schematic diagram of an image selection component according to embodiments of the present disclosure. As shown therein, the image selection component is capable of present at least the following controls in a display area, respectively:
image processing scenario selection controls (e.g. image processing scenario selection controls 111-113 in Figs. 3-4) for selecting a corresponding image processing scenario in response to a first control instruction;
image directory selection controls (e.g. image directory selection controls 121-124 in Figs. 3-8) for selecting a corresponding image directory in response to a second control instruction; and
a display control for displaying, based on the image processing scenario and the image directory, first image thumbnails (e.g. image thumbnails 1301-1312) in a first area (e.g. the first area 130 in Figs. 3-8) of the display area;
wherein the display control is further used for displaying target image thumbnails (e.g. image thumbnails 1301-1315 in Fig. 4) in the first area in response to an operation instruction (e.g., a first, a second or a third operation instruction) for the first image thumbnails.

In some embodiments, displaying, based on the image processing scenario and the image directory, the first image thumbnails in the first area of the display area comprises:
obtaining, based on the image processing scenario and the image directory, first index information of a first image to be processed;
determining, from the first index information, first target index information;
obtaining, based on the first target index information, the first image thumbnails, and storing the first image thumbnails in a cache; and
displaying, in the first area, the first image thumbnails in the cache.

In some embodiments, obtaining, based on the image processing scenario and the image directory, the first index information of the first image to be processed comprises:
filtering, based on a preset rule corresponding to the image processing scenario and the image directory, all images to be processed to determine the first image to be processed; and
obtaining the first index information of the first image to be processed.

In some embodiments, the first image thumbnails each comprises a visible identifier, and displaying, based on the image processing scenario and the image directory, the first image thumbnails in the first area of the display area further comprises:
performing a first value assignment operation on the visible identifiers of the first image thumbnails when storing the first image thumbnails into the cache.

In some embodiments, the operation instruction for the first image thumbnails comprises:
a first operation instruction for displaying the first image thumbnails in a scrolling manner;
a second operation instruction for switching the image processing scenario; or
a third operation instruction for switching the image directory.

In some embodiments, the target image thumbnail comprises a second image thumbnail different from the first image thumbnails, and wherein the second image thumbnail is obtained based on corresponding image index information and stored in the cache, and a first value assignment operation is performed on a visible identifier of the second image thumbnail.

In some embodiments, the first image thumbnails comprise a third image thumbnail different from the target image thumbnails, and wherein displaying, in the first area, the target image thumbnails comprises:
performing a second value assignment operation on a visible identifier of the third image thumbnail after removing the first image thumbnails having a preset identifier value from a cache;
receiving a new operation instruction for the target image thumbnails at least once; and
in response to an end of each new operation instruction, removing an image thumbnail having the preset identifier value from the cache, and then performing the second value assignment operation on a visible identifier of the image thumbnail removed from the first area.

In some embodiments, the display control is further used for:
in response to a first selection instruction for the first image thumbnails, displaying, in a second area of the display area, a selected first image thumbnail.

In some embodiments, the display control is further used for:
in response to a second selection instruction for the target image thumbnails, displaying, in the second area of the display area, a selected target image thumbnail.

On the basis of the same technical idea, the present disclosure further provides an image selection method according to any of the embodiments described above. Referring to Fig. 10, the image selection method 1000 comprises:
step S1010: in response to selecting a first control instruction of a corresponding image processing scenario and in response to selecting a corresponding image directory, displaying, based on the image processing scenario and the image directory, first image thumbnails in a first area of the display area; and
step S1020: in response to an operation instruction for the first image thumbnails, displaying, in the first area, target image thumbnails.

In some embodiments, the image selection method 1000 further comprises:
in response to a first selection instruction for the first image thumbnails, displaying, in a second area of the display area, a selected first image thumbnail.

In some embodiments, the image selection method 1000 further comprises:
in response to a second selection instruction for the target image thumbnails, displaying, in the second area of the display area, a selected target image thumbnail.

It is worth noting that the method according to the embodiments of the present disclosure can be performed by a single device, for example, a computer, a server or the like. The method according to the embodiments can be applied to a distributed scenario and implemented through cooperation of multiple devices. In the distributed scenario, one of the multiple devices can perform only one or more steps of the method according to the embodiments of the present disclosure, and the multiple devices can interact with one another to implement the method.

Some embodiments of the present disclosure have been described above. Other embodiments fall within the range defined by the appended claims. In some circumstances, the acts or steps as recited in the claims can be executed in an order different than the one described in the above embodiments and can still achieve the desired result. Further, the process depicted in the drawings should not be understood as requiring the particular order shown or the sequential order to achieve the desired result. In some implementations, multitasking and parallel processing may be advantageous.

On the basis of the same technical idea, the present disclosure further provides a non-transitory computer readable storage medium corresponding to the method according to any of the embodiments described above, where the non-transitory computer readable storage medium stores computer instructions that cause the computer to implement the image processing method according to any of the embodiments described above.

A computer-readable medium may include permanent or non-permanent, movable or non-movable medium and can implement information storage by means of any method or technology. The information may be a computer-readable instruction, a data structure, a program device or other data. The examples of a computer storage medium include, but are not limited to, a Phase-change Random Access Memory (PRAM), a Static Random Access Memory (SRAM), a Dynamic Random Access Memory (DRAM) or other type of Random Access Memory (RAM), a Read-Only Memory (ROM), an Electrically Erasable Programmable Read-Only Memory (EEPROM), a flash memory or other memory technology, a Compact Disk Read-Only Memory (CD-ROM), a Digital Versatile Disc (DVD) or other optical storage, a magnetic cassette tape, a magnetic tape and magnetic disk storage or other magnetic storage device, or any other non-transmission media, which can be used to store information that can be accessed by a computing device.

The computer instructions stored in the storage medium according to the above embodiments are used to cause the computer to implement the image selection method according to any of the embodiments described above, and can achieve the advantageous effects of the corresponding method embodiments, which are omitted herein for brevity.

On the basis of the same technical idea, the present disclosure further provides a computer program product corresponding to the method according to any of the embodiments described above, which includes computer program instructions that cause a computer to perform the image selection method of any of the embodiments described above when executed by the computer.

Prior to applying the technical solution according to various embodiments of the present disclosure, the user should be informed of the type, scope of use, and use scenario of the personal information involved in an appropriate manner, and user authorization should be obtained.

For example, in response to receiving an active request from a user, prompt information is sent to the user to explicitly inform the user that the requested operation would acquire and use the user's personal information. Therefore, according to the prompt information, the user may decide on his/her own whether to provide the personal information to software or hardware, such as electronic devices, applications, servers or storage media that perform operations of the technical solution of the present disclosure.

As an optional implementation, without limitation, in response to receiving an active request from a user, the method of sending prompt information to the user may, for example, include a pop-up window, where the prompt information may be presented in the form of text in the pop-up window. In addition, the pop-up window may also carry a select control for the user to choose to "agree" or "disagree" to provide the personal information to the electronic device.

The above process of notifying and obtaining the user authorization is only illustrative, and other methods compliant with the provisions of the relevant laws and regulations can also be applied to the implementations of the present disclosure.

It should be understood by those skilled in the art that the discussion of any of the above embodiments is merely exemplary, and is not intended to limit the scope of the present disclosure. According to the idea of the present disclosure, the technical features in the above embodiments or different embodiments may be combined, the steps may be carried out in any order, and many other variations may be made to the different aspects of the present disclosure as described above, which are not provided in detail for the sake of brevity.

In addition, for simplicity of illustration and discussion and in order not to obscure the present disclosure, well-known power/ground connections to integrated circuit (IC) chips and other components are not shown in the accompanying drawings. Furthermore, in order to avoid obscuring the present disclosure, devices may be shown in block diagrams, which are also based on the fact that the details of the embodiments of the devices shown in the block diagrams are highly dependent on a platform on which the present disclosure is to be implemented (i.e., these details should be fully understood by those skilled in the art). In such a case that specific details (e.g. circuits) are described to describe the exemplary embodiments of the present disclosure, it will be apparent to those skilled in the art that the present disclosure may be practiced without these specific details or with the specific details being changed. Accordingly, the description should be considered as illustrative rather than restrictive.

Although the present disclosure has been described in conjunction with the specific embodiments, many alternatives, modifications and variations of these embodiments will be apparent to those skilled in the art. For example, other memory architectures (e.g. dynamic RAM (DRAM)) may be used in the embodiments discussed above.

The embodiments of the present disclosure are intended to cover all alternatives, modifications and variations that fall within the broad scope of the appended claims. Therefore, any omissions, modifications, equivalents, and improvements, which are made within the spirit and principles of the present disclosure, are intended to be included within the scope of the present disclosure.

## Claims

1. An image selection component, wherein the image selection component is capable of presenting at least the following controls in a display area:
an image processing scenario selection control for selecting a corresponding image processing scenario in response to a first control instruction;
an image directory selection control for selecting a corresponding image directory in response to a second control instruction; and
a display control for displaying first image thumbnails in a first area of the display area based on the image processing scenario and the image directory,
wherein the display control is further used for displaying target image thumbnails in the first area in response to an operation instruction for the first image thumbnails.

2. The image selection component of claim 1, wherein displaying the first image thumbnails in the first area of the display area based on the image processing scenario and the image directory comprises:
obtaining, based on the image processing scenario and the image directory, first index information of a first image to be processed;
determining, from the first index information, first target index information;
obtaining the first image thumbnails based on the first target index information, and storing the first image thumbnails in a cache; and
displaying, in the first area, the first image thumbnails in the cache.

3. The image selection component of claim 2, wherein obtaining, based on the image processing scenario and the image directory, the first index information of the first image to be processed comprises:
filtering, based on a preset rule corresponding to the image processing scenario and the image directory, all images to be processed to determine the first image to be processed; and
obtaining the first index information of the first image to be processed.

4. The image selection component of claim 2, wherein the first image thumbnails each comprises a visible identifier, and wherein displaying, based on the image processing scenario and the image directory, the first image thumbnails in the first area of the display area further comprises:
performing a first value assignment operation on the visible identifier of the first image thumbnails when storing the first image thumbnails into the cache.

5. The image selection component of claim 1, wherein the operation instruction for the first image thumbnails comprises:
a first operation instruction for displaying the first image thumbnail in a scrolling manner;
a second operation instruction for switching the image processing scenario; or
a third operation instruction for switching the image directory.

6. The image selection component of claim 1, wherein the target image thumbnail comprises a second image thumbnail different from the first image thumbnails, and wherein the second image thumbnail is obtained based on corresponding image index information and is stored in the cache, and a first value assignment operation is performed on a visible identifier of the second image thumbnail.

7. The image selection component of claim 1, wherein the first image thumbnails comprise a third image thumbnail different from the target image thumbnail, and wherein displaying the target image thumbnails in the first area comprises:
performing a second value assignment operation on a visible identifier of the third image thumbnail after removing a first image thumbnails with a preset identification value from a cache;
receiving a new operation instruction for the target image thumbnails at least once; and
in response to an end of each new operation instruction, removing an image thumbnail with the preset identification value from the cache, and then performing the second value assignment operation on a visible identifier of the image thumbnail removed from the first area.

8. The image selection component of claim 1, wherein the display control is further used for:
in response to a first selection instruction for the first image thumbnails, displaying a selected first image thumbnail in a second area of the display area; or
in response to a second selection instruction for the target image thumbnails, displaying a selected target image thumbnail in the second area of the display area.

9. An image selection method, comprising:
in response to selecting a first control instruction of a corresponding image processing scenario and in response to selecting a corresponding image directory, displaying first image thumbnails in a first area of the display area based on the image processing scenario and the image directory; and
in response to an operation instruction for the first image thumbnails, displaying target image thumbnails in the first area.

10. The image selection method of claim 9, further comprising:
in response to a first selection instruction for the first image thumbnails, displaying a selected first image thumbnail in a second area of the display area; or
in response to a second selection instruction for the target image thumbnails, displaying a selected target image thumbnail in the second area of the display area.

11. An electronic device, comprising:
a memory;
a processor; and
computer programs stored on the memory and executable by the processor, when executed by the processor, the computer programs cause the processor implement the method of claim 9 or 10.

12. A non-transitory computer readable storage medium having computer instructions stored thereon, wherein the computer instructions, when executed, cause a computer to implement the method of claim 9 or 10.

13. A computer program product comprising computer program instructions, wherein the computer program instructions, when executed by a computer, cause the computer to perform the method of claim 9 or 10.
